**Europäisches Patentamt**

**European Patent Office**

**Office européen des brevets**

(19)

(11) Veröffentlichungsnummer : **0 381 063 B1**

(12)

# EUROPÄISCHE PATENTSCHRIFT

(45) Veröffentlichungstag der Patentschrift :
**04.08.93 Patentblatt 93/31**

(51) Int. Cl.⁵ : **B01J 23/10**, B01J 23/56,
B01J 23/89, B01D 53/36

(21) Anmeldenummer : **90101542.0**

(22) Anmeldetag : **26.01.90**

(54) **Verfahren zur Herstellung eines Trägermaterials für platingruppenmetallhaltige Dreiweg-Katalysatoren mit verringerter Neigung zur H2S-Emission.**

(30) Priorität : **01.02.89 DE 3902913**

(43) Veröffentlichungstag der Anmeldung :
**08.08.90 Patentblatt 90/32**

(45) Bekanntmachung des Hinweises auf die
Patenterteilung :
**04.08.93 Patentblatt 93/31**

(84) Benannte Vertragsstaaten :
**BE DE FR GB IT NL SE**

(56) Entgegenhaltungen :
**EP-A- 0 244 127
EP-A- 0 251 752
EP-A- 0 321 949
US-A- 3 870 455
US-A- 3 993 572**

(73) Patentinhaber : **DEGUSSA AG
Weissfrauenstrasse 9
W-6000 Frankfurt (Main) (DE)**

(72) Erfinder : **Koberstein, Edgar, Dr.
Wolfskernstrasse 8
W-8755 Alzenau (DE)**
Erfinder : **Engler, Bernd, Dr.
Treuener Strasse 2
W-6450 Hanau 9 (DE)**
Erfinder : **Domesle, Rainer, Dr.
Rannenbergring 56
W-8755 Alzenau-Kälberau (DE)**
Erfinder : **Schubert, Peter, Dr.
Grünaustrasse 17
W-6450 Hanau 9 (DE)**

**Beschreibung**

Die Erfindung betrifft ein Verfahren zur Herstellung eines Trägermaterials für Platingruppenmetall-haltige Dreiwegkatalysatoren zur Reinigung der Abgase von Brennkraftmaschinen, welches gegebenenfalls mit einem oder mehreren Oxiden von Unedelmetallen dotiert ist, bestehend aus aktivem Aluminiumoxid und mindestens 10 Gew.% Ceroxid, bezogen auf die Summe aller Trägerbestandteile, erhalten durch Trocknen eines wäßrigen, aus Aluminiumoxid und einer Cerverbindung bestehenden Gemisches und anschließendes Tempern bei mindestens 350° C.

Moderne Hochleistungs-Abgaskatalysatoren speichern bei magerer Fahrweise des Motors erhebliche Mengen des aus dem Kraftstoff stammenden Schwefeloxids in Form von Sulfat und Sulfit. Beim Anfetten des Kraftstoffgemisches, z. B. beim Beschleunigen des Fahrzeuges, werden die so vom Katalysator gespeicherten Schwefelverbindungen durch im Abgas vorhandenen Wasserstoff reduziert und in Form von Schwefelwasserstoff rasch freigesetzt. Da eine solche Schwefelwasserstoffemission aus umwelthygienischen Gründen unerwünscht ist, bestand ein dringender Bedarf, sie zu unterdrücken.

Als Problemlösung wird in EP-A-0 244 127 ein Zusatz von Nickel vorgeschlagen. Da Nickel und seine Verbindungen jedoch gesundheitlich nicht unbedenklich sind, erfordern die Herstellung und Handhabung solcher Katalysatoren aufwendige Sicherheitsmaßnahmen. Es bestand daher ein Bedarf, Autoabgaskatalysatoren zu entwickeln, die eine deutliche Unterdrückung der Schwefelwasserstoffemission auch ohne Nickelzusätze zeigen.

Da Hochleistungskatalysatoren für die Autoabgasreinigung zur Zeit höhere Ceroxidgehalte haben und Ceroxid eine starke Neigung zur Schwefeloxidspeicherung zeigt, wird die Schwefelwasserstoffemission überwiegend davon beeinflußt, in welcher Form das Ceroxid als Trägermaterialkomponente des Katalysators oder als alleiniges Trägermaterial vorliegt.

Ceroxidhaltige Trägermaterialien für Autoabgaskatalysatoren werden zum Beispiel in der US-Patentschrift 3,993,572 sowie in den beiden europäischen Patentanmeldungen EP-A-0 251 752 und EP-A-0 321 949 beschrieben. Die US-Patentschrift hat die Herstellung eines stabilisierten Trägermaterials aus aktiviertem Aluminiumoxid durch Zugabe von bis zu 30 Gew.-% Ceroxid zum Ziel. Dazu wird eine Suspension aus aktiviertem Aluminiumoxid und gelöstem Cernitrat während 17 Stunden getrocknet, gemahlen und abschließend bei 1000° C kalziniert. In der EP-A-0 251 752 wird unter anderem die Imprägnierung eines $\gamma$-Aluminiumoxids mit Cernitrat beschrieben. Die Imprägnierung wird mehrfach wiederholt, bis die resultierende Mischung einen Gewichtsanteil von 30 % Ceroxid aufweist. Anschließend wird auch dieses Material bei 750° C kalziniert. Als weitere Möglichkeit, ein Ceroxid und Aluminiumoxid enthaltendes Trägermaterial herzustellen, beschreibt die EP-A-0 321 949 die Copräzipitation von Cer- und Aluminiumsalzen.

Der erhaltene Niederschlag wir in einer Kugelmühle gemahlen, bei 150° C getrocknet und anschließend bei 1000° C kalziniert.

Diese aus dem Stand der Technik bekannten Verfahren zur Herstellung von Cer- und Aluminiumoxid enthaltenden Trägermaterialien erfordern zum Teil lang dauernde Trocknungsschritte sowie aufwendige Mahlprozesse zur Kornbildung. Die genannten Patentschriften und -anmeldungen geben keinerlei Hinweis über die Eignung dieser Trägermaterialien für die Verminderung der Schwefelwasserstoff-Emission bei der Autoabgas-Reinigung.

Es wurde nun gefunden, daß das geschilderte Problem der Verminderung der Schwefelwasserstoffemission gelöst werden kann, wenn zumindest das Ceroxid des Trägermaterials, vorzugsweise überwiegend, als Sprühkorn eingesetzt wird.

Gegenstand der Erfindung ist demgemäß ein Verfahren zur Herstellung eines Trägermaterials für Platingruppenmetall-haltige Dreiwegkatalysatoren zur Reinigung der Abgase von Brennkraftmaschinen, welches gegebenenfalls mit einem oder mehreren Oxiden von Unedelmetallen dotiert ist, bestehend aus aktivem Alumimiumoxid und mindestens 10 Gew.% Ceroxid, bezogen auf die Summe aller Trägerbestandteile, erhalten durch Trocknen eines wäßrigen, aus Aluminiumoxid und einer Cerverbindung bestehenden Gemisches und anschließendes Tempern bei mindestens 350° C.

Das Verfahren ist dadurch gekennzeichnet, daß eine wäßrige Suspension aus bis zu 90 Gewichtsteilen aktivem, gegebenenfalls gitterstabilisiertem Aluminiumoxid und/oder seiner jeweiligen Vorstufe und mindestens 10 Gewichtsteilen Ceroxid oder einer löslichen und/oder unlöslichen Vorstufe des Ceroxids, gerechnet als $CeO_2$, sprühgetrocknet und das dabei erhaltene Gut 15 Minuten bis 24 Stunden bei Temperaturen bis 1140°C, vorzugsweise bei 700 - 1050° C, getempert wird.

Das Trägermaterial kann also aus Gemischen von $Al_2O_3$ und Ceroxid oder nur aus Ceroxid bestehen. Wesentlich ist, daß das genannte Gemisch oder das Ceroxid allein einer Sprühtrocknung aus wäßriger Suspension unterworfen wurde. Anstelle der Oxide können Vorstufen derselben, also Salze, wie Cer(III)nitrat, Ammonium(IV)cerinitrat, Cer(III)chlorid, Cer(III)oxalat, Cer(III)acetat u. a. oder Hydroxide verwendet werden. Wesentlich ist weiterhin, daß der Sprühtrocknung eine Temperung bei den angegebenen Bedingungen nachgeschaltet wird, um dem Sprühkorn seine endgültigen Eigenschaften zu verleihen. Vorzugsweise setzt man aktives Aluminiumoxid in Form eines durch Fällung und Calcinierung gewonnenen Aluminiumoxids der sog. Übergangsreihe, wie $\gamma$-Al$_2$O$_3$, oder als feinstteiliges pyrogen erhältliches Al$_2$O$_3$ ein. Eine ebenfalls gut geeignete Aluminiumoxid-Vorstufe ist reiner Pseudoböhmit oder Böhmit oder eine Mischung von Pseudoböhmit und Böhmit. Ebenfalls geeignete Vorstufen bestehen aus Pseudoböhmit und/oder Böhmit mit Aluminiumoxid der Übergangsreihe und/oder mit pyrogenem Aluminiumoxid.

Die gemäß dem erfindungsgemäßen Verfahren hergestellten neuen Trägermaterialien können als Schüttgut in Form von Extrudaten, Granulaten oder Preßlingen oder als Überzug auf inerten Trägern angewandt werden. Sie können dotiert sein mit oxidischen Unedelmetall, wie TiO$_2$, ZrO$_2$, La$_2$O$_2$, CaO, BaO, Fe$_2$O$_3$ u. a., welche die Wirkung der katalytisch aktiven Platingruppenelemente modifizieren.

An sich lassen sich diese Trägermaterialien bei Aufbringung mittels Dispersion auf übliche, katalytisch inerte keramische oder metallische strukturelle Verstärker in Schüttgut-, Monolith- oder Wabenform bereits mit ausreichender Haftfestigkeit fixieren.

Nach einer vorteilhaften Variante der Erfindung läßt sich diese Eigenschaft weiter verbessern, wenn man das nach Anspruch 1 hergestellte sprühgetrocknete Trägermaterial noch mit bis zu 80 Gewichtsteilen eines üblichen gamma-Aluminiumoxids oder einer Vorstufe desselben und/oder eines üblichen Ceroxids, gerechnet als CeO$_2$, oder einer seiner löslichen und/oder unlöslichen Vorstufen kombiniert. Hierbei kann, wenn Vorstufen eines oder beider Oxide eingesetzt werden, anschließend zur Herstellung der Oxidform calciniert werden. Hierbei genügen die zur Zersetzung der Vorstufen erforderlichen Temperaturen und Zeiten. Diese Calcinierung kann jedoch bei der Herstellung von Monolithkatalysatoren erst an dem durch Dispersionsbeschichtung erhaltenen Überzug aus dem Trägermaterial, vorgenommen werden.

Die Erfindung wird nachfolgend anhand von Ausführungsbeispielen weiter erläutert.

Vergleichsbeispiel 1

Ein keramischer Wabenkörper aus Cordierit mit 62 Zellen/cm$^2$ wurde mit 160 g/l Trägervolumen eines Oxidgemisches beschichtet. Hierzu wurde eine wäßrige Suspension mit einem Feststoffgehalt von 52 Gew.% und folgender Zusammensetzung für das nach Aktivierung vorliegende Oxidgemisch verwendet:

61,4 Gew.-Teile      $\gamma$-Aluminiumoxid
36,8 Gew.-Teile      Ceroxid, als Cer(III)-acetat eingebracht
1,8 Gew.-Teile      Zirkonoxid, als Zirkonylacetat eingebracht

Nach der Belegung des Trägerkörpers mit der Oxidschicht wurde bei 120° C getrocknet und sodann 15 Minuten bei 350° C und weitere 2 Stunden bei 600° C aktiviert. Anschließend wurde der so beschichtete Wabenkörper in eine wäßrige Lösung von Hexachloroplatinsäure und Rhodiumchlorid im Gewichtsverhältnis 5 : 1 getaucht und getrocknet. Der Gesamtedelmetallgehalt betrug nach dieser Behandlung 1,41 g/l Trägervolumen. Nach einer zwei-stündigen Temperung bei 550° C an Luft erfolgte schließlich die Reduktion der auf dem Trägermaterial abgeschiedenen Edelmetallsalze im Wasserstoffstrom bei einer Temperatur von 550° C für die Dauer von 4 Stunden.

Beispiel 1

Der gleiche keramische Wabenkörper wie in Vergleichsbeispiel 1 wurde mit der gleichen Oxidschicht und im wesentlichen auf die gleiche Weise wie in Vergleichsbeispiel 1 beschrieben, beschichtet, getrocknet und aktiviert. Im Unterschied zu Vergleichsbeispiel 1 wurde jedoch als Ceroxidkomponente ein durch Sprühtrocknung hergestelltes CeO$_2$-Al$_2$O$_3$-Gemisch mit einem Massenverhältnis CeO$_2$ : Al$_2$O$_3$ von 1 : 1 verwendet. Die Al$_2$O$_3$-Anteile im Oxidgemisch wurden mit dem zusätzlichen $\gamma$-Al$_2$O$_3$ bilanziert.

Die Herstellung des Sprühkorns erfolgte in einem handelsüblichen Sprühtrockner durch Versprühen einer Lösungssuspension, bestehend aus Pseudoböhmit, Wasser und gelöstem Cer(III)-nitrat. Das so erhaltene Produkt wurde 12 Stunden bei 350° C und weitere 6 Stunden bei 1000° C an Luft getempert.

Die Aufbringung des Edelmetalls auf den beschichteten Träger erfolgte nach der Methode des Vergleichsbeispiels 1.

Beispiel 2

Die Präparation dieses Katalysators erfolgte analog Beispiel 1. Bei der Herstellung des Sprühkorns wurde jedoch anstelle des Pseudoböhmit pyrogenes Aluminiumoxid (Aluminiumoxid C der Degussa AG) verwendet. Das Sprühkorn wurde hier 12 Stunden bei 350° C und anschließend 12 Stunden bei 1000° C getempert.

Beispiel 3

Die Präparation des Katalysators erfolgte analog Beispiel 2. Die Zeit der zweiten Temperstufe betrug bei der Sprühkornherstellung jedoch 24 Stunden.

Beispiel 4

Die Belegung des Trägerkörpers mit der Oxidschicht sowie die Aufbringung der Edelmetalle erfolgten gemäß der Methode im Beispiel 2. Der Unterschied zu Beispiel 2 bestand darin, daß das Massenverhältnis des als Ceroxidkomponente eingesetzten Sprühkorns $CeO_2 : Al_2O_3 = 3 : 7$ betrug. Die Temperung des Sprühkorns vor der Verwendung als Washcoatkomponente wurde bei 1000° C, 6 Stunden an Luft, durchgeführt.

Beispiel 5

Die Präparation dieses Katalysators erfolgte analog Beispiel 4 mit dem Unterschied, daß die Zusammensetzung des Sprühkorns $CeO_2 : Al_2O_3 = 1 : 9$ betrug.

Beispiel 6

Die Herstellung dieses Katalysators erfolgte gemäß Beispiel 2. Im Unterschied dazu wurde jedoch auf die zweite Temperstufe für das Sprühkorn bei 1000° C, 12 Stunden an Luft, verzichtet.

Beispiel 7

Die Präparation dieses Katalysators erfolgte analog Beispiel 2 mit dem Unterschied, daß das aus dem Sprühtrockner kommende Rohkorn 12 Stunden bei 700° C an Luft getempert wurde.

Beispiel 8

Die Präparation des Katalysators erfolgte analog Beispiel 7. Im Unterschied dazu wurde das Sprühkorn jedoch 12 Stunden bei 800° C an Luft getempert.

Beispiel 9

Die Präparation des Katalysators erfolgte analog Beispiel 7. Im Unterschied dazu wurde das Sprühkorn jedoch 12 Stunden bei 950° C an Luft getempert.

Beispiel 10

Die Präparation des Katalysators erfolgte analog Beispiel 7. Im Unterschied dazu wurde das Sprühkorn jedoch 12 Stunden bei 1050° C an Luft getempert.

Beispiel 11

Die Präparation des Katalysators erfolgte analog Beispiel 7. Im Unterschied dazu wurde das Sprühkorn jedoch 15 Minuten bei 1140° C an Luft getempert.

Vergleichsbeispiel 2

Ein keramischer Wabenkörper (62 Zellen/cm²) wurde auf dieselbe Weise wie in Vergleichsbeispiel 1 beschrieben mit 100 g/l Trägervolumen eines Oxidgemisches beschichtet, getrocknet und aktiviert. Die Oxidschicht hatte folgende Zusammensetzung:
90 Gew.-Teile      $\gamma$-Aluminiumoxid
10 Gew.-Teile      Ceroxid, als Cer(III)-nitrat eingebracht
Die Aufbringung und Aktivierung der Edelmetalle Platin und Rhodium erfolgte nach der in Vergleichsbeispiel 1 angegebenen Methode. Als Platinkomponente diente Hexachloroplatinsäure, als Rhodiumkomponente Rhodiumnitrat. Der Gesamtedelmetallgehalt des fertigen Katalysators betrug 1,41 g/l Trägervolumen. Das Pt/Rh-Verhältnis betrug wiederum 5 : 1.

## Beispiel 12

Die Präparation des Katalysators erfolgte im wesentlichen analog Vergleichsbeispiel 2. Als Ceroxidkomponente wurde jedoch ein durch Sprühtrocknung und Temperung bereitetes Ceroxid verwendet.

Zur Herstellung des Ceroxidsprühkorns wurde in einem Sprühtrockner eine wäßrige Cer(III)acetatlösung (18 g/100 ml) versprüht. Das erhaltene Rohprodukt wurde 4 Stunden bei 350° C und weitere 24 Stunden bei 950° C getempert.

## Vergleichsbeispiel 3

Ein keramischer Wabenkörper (62 Zellen/cm²) wurde auf dieselbe Weise wie in Vergleichsbeispiel 1 beschrieben mit 120 g/l Trägervolumen des folgenden Oxidgemisches beschichtet, getrocknet und aktiviert:
20 Gew.-Teile    γ-Aluminiumoxid
80 Gew.-Teile    Ceroxid als Ammoniumcer(IV)-nitrat eingebracht

Die Beladung mit den Edelmetallen und deren Aktivierung erfolgte ebenfalls analog Vergleichsbeispiel 1.

## Beispiel 13

Dieser Katalysator wurde im wesentlichen analog Vergleichsbeispiel 3 präpariert mit dem Unterschied, daß als Ceroxidkomponente ein durch Sprühtrocknung und Tempern hergestelltes Ceroxid/Aluminiumoxid-Gemisch verwendet wurde.

Die Herstellung des Sprühkorns erfolgte in einem Sprühtrockner durch Versprühen einer Suspensionslösung, bestehend aus γ-Aluminiumoxid, Wasser und gelöstem Ammoniumcer(IV)nitrat.

Das so erhaltene Produkt wurde 6 Stunden bei 350° C und weitere 18 Stunden bei 980° C aktiviert. Das so behandelte Sprühkorn hatte ein $CeO_2/Al_2O_3$-Massenverhältnis von 80 : 20.

## Beispiel 14

Der Katalysator wurde im wesentlichen analog Vergleichsbeispiel 3 präpariert. Ein Unterschied bestand jedoch darin, daß das $\gamma$-$Al_2O_3$ ausschließlich über ein zuvor hergestelltes Ceroxid/$Al_2O_3$-Sprühkorn mit einem Massenverhältnis von 1 : 1 eingebracht wurde. Die Bilanzierung des Ceroxidgehaltes erfolgte über eine Zugabe von Ammoniumcer(IV)-nitrat.

Die Herstellung des Sprühkorns erfolgte gemäß dem Verfahren in Beispiel 2. Zum Unterschied dazu wurde das Sprühkorn jedoch 20 Stunden bei 900° C getempert.

## Testung der Katalysatoren

Die Prüfung der nach den vorstehenden Präparations-beispielen gefertigten Katalysatoren hinsichtlich ihrer Eigenschaften bei der Umsetzung der Abgasschadstoffe Kohlenmonoxid, Kohlenwasserstoffe und Stickoxide sowie hinsichtlich ihrer Schwefelwasserstoff-Emissionscharakteristik erfolgte in einer Testanlage, die mit einem synthetischen Gasgemisch, entsprechend dem einer Verbrennungskraftmaschine, arbeitet. Die Abmessungen der Testkatalysatoren waren generell zylindrisch (Durchmesser x Höhe = 25 x 76 mm). Die Raumgeschwindigkeit betrug 50.000 h $^{-1}$. Als Kohlenwasserstoffkomponente wurde exemplarisch Propan verwendet.

## Testzyklus zur Bestimmung der $H_2S$-Emissionscharakteristik ($H_2S$-Testzyklus)

Der Testzyklus besteht im wesentlichen aus 3 Meßphasen (vgl. Testschema Abb. 1). Die Phase I beschreibt den direkten, stationären Umsatz von $SO_2$ zu $H_2S$ unter reduzierenden (fetten) Abgasbedingungen am Katalysator. Die Phase II dient der definierten Schwefeloxidspeicherung (gespeichert wird als TO · $SO_2$ bzw. TO · $SO_3$; TO≡ Trägeroxid). In der Phase III (Schwefelentladung) wird die Schwefelwasserstoffemission nach drei bzw. 15 Min. Betriebszeit unter fetten Abgasbedingungen integral gemessen.

Mit diesem Testzyklus kann das Schwefel-Speicher- und -Emissionsverhalten von Abgaskatalysatoren quantitativ erfaßt werden. Die Gesamtemission an Schwefelwasserstoff (Summenwert aus Meßphase I und III) ist von praktischer Bedeutung und wurde daher als diskriminierende Meßgröße verwendet. Die Abgastemperatur vor Katalysator betrug für alle drei Meßphasen 470° C. Für das fette Abgas ($\lambda = 0.92$) wurde folgende synthetische Mischung verwendet:

Tabelle 1: Zusammensetzung des synthetischen Abgases
für $\lambda$ = 0.92

| Komponente | Vol. % |
|---|---|
| $N_2$ | 76.69 |
| $CO_2$ | 10 |
| $H_2O$ | 10 |
| $O_2$ | 0,25 |
| $CO/H_2$ = 3/1 | 2,85 |
| NO | 0,15 |
| $C_3H_8$ | 0,06 |
| $SO_2$ | 0,002 |

Die magere Abgasmischung ($\lambda$ = 1.02) unterschied sich von der fetten lediglich im Sauerstoff- und $CO/H_2$-Gehalt; die Bilanzierung der Gasmischung auf 100 Vol.% erfolgt mit Stickstoff.

Tabelle 2: Zusammensetzung des synthetischen Abgases
für $\lambda$ = 1.02

| Komponente | Vol. % |
|---|---|
| $N_2$ | 77,65 |
| $O_2$ | 1,48 |
| $CO/H_2$ = 3/1 | 0,66 |
| ansonsten vgl. oben | |

Katalytische Aktivität

Die Konversion der Schadstoffe CO, HC und NO wurde unter Gleichgewichtsbedingungen bei einer Abgastemperatur von 450° C ermittelt. Zur Charakterisierung des Kaltstartverhaltens der Katalysatoren wurde die Temperatur des Abgases linear von 75° C bis 450° C mit einer Heizrate von 15° C/min. hochgefahren. Dabei wurde gleichzeitig die Schadstoffkonvertierung aufgezeichnet. Die Temperaturen, bei denen ein Umsatzgrad von 50 %. erzielt wird, werden kurz mit dem Index 50 bezeichnet. Der Index dient als Maß für die Anspringfreudigkeit des Katalysators zur Umsetzung der jeweiligen Schadstoffkomponente.

Zur Charakterisierung des Alterungsverhaltens wurden die Katalysatoren 24 Stunden bei 950° C an Luft behandelt.

Tabelle 3: Zusammensetzung des synthetischen Abgases
für $\lambda = 1,01$ (mager)

| Komponente | Vol. % |
|------------|--------|
| $N_2$ | 72,55 |
| $CO_2$ | 14,00 |
| $H_2O$ | 10,00 |
| $O_2$ | 1,42 |
| $CO$ | 1,40 |
| $H_2$ | 0,47 |
| $NO$ | 0,10 |
| $C_3H_8$ | 0,06 |

Die Gasmischung für die Simulation eines fetten Abgases ($\lambda = 0,98$) unterscheidet sich von der oben genannten Zusammensetzung lediglich dadurch, daß der Sauerstoffanteil entsprechend kleiner und der Stickstoffanteil entsprechend größer gewählt wurde.

Von technischer Bedeutung sind die Schwefelwasserstoff-Gesamtemissionen der frischen Katalysatoren, die bei Anwendung des erfindungsgemäßen Herstellungsverfahrens erheblich abgesenkt sind (vgl. Tabelle 4). Die Aktivitäten hinsichtlich der Konvertierung der Schadstoffe Kohlenmonoxid (CO), Kohlenwasserstoff (HC) und Stickoxid (NO) werden durch die Präparation der Abgaskatalysatoren nur unwesentlich beeinflußt (Tabellen 5 bis 8). Letzteres gilt sowohl für frische als auch für gealterte Katalysatoren.

EP 0 381 063 B1

Schema $H_2S$-1-Testzyklus

| | Phase I | | | Phase II | | Phase III | |
|---|---|---|---|---|---|---|---|
| | (stationäre $H_2S$-Bildung) | | | (S-Beladung) | | (S-Entladung als $H_2S$) | |
| | $\lambda = 0.92$ | | | $\lambda = 1.02$ | | $\lambda = 0.92$ | |
| Konditionierung | 10min | 15min | 60 min | 2 min | 3 min | 12 min |
| keine $SO_2$-Dosierung bis HC, CO, NO const. | —20 ppm $SO_2 \rightarrow$ | -20 ppm $SO_2 \rightarrow$ | -20 ppm $SO_2 \rightarrow$ | keine $SO_2$-Dosierg. | keine Dosierung | $SO_2$- |

0    15 0    60    62 0    3    15min

$H_2S$-Messung

$H_2S$-Messung    $H_2S$-Messung

Tabelle 4: Schwefelwasserstoffemissionsverhalten der Katalysatoren

| Katalysator | Schwefelwasserstoffgesamtemission [mgS/m³ Abgas] Katalysator frisch |
|---|---|
| V-Beisp. 1 | 222 |
| Beispiel 1 | 168 |
| Beispiel 2 | 139 |
| Beispiel 3 | 69 |
| Beispiel 4 | 162 |
| Beispiel 5 | 125 |
| Beispiel 6 | 202 |
| Beispiel 7 | 189 |
| Beispiel 8 | 172 |
| Beispiel 9 | 151 |
| Beispiel 10 | 133 |
| Beispiel 11 | 112 |
| V-Beispiel 2 | 117 |
| Beispiel 12 | 78 |
| V-Beispiel 3 | 241 |
| Beispiel 13 | 161 |
| Beispiel 14 | 168 |

Tabelle 5:

| Katalysator frisch | Anspringtemperatur/$^0$ C | | | | | |
|---|---|---|---|---|---|---|
| | $\lambda$ = 0,98 | | | $\lambda$ = 1,01 | | |
| | $CO_{50}$ | $HC_{50}$ | $NO_{50}$ | $CO_{50}$ | $HC_{50}$ | $NO_{50}$ |
| V-Beisp. 1 | 156 | 261 | 161 | 150 | 187 | – |
| Beispiel 1 | 157 | 207 | 166 | 152 | 180 | – |
| " 2 | 154 | 234 | 154 | 148 | 171 | – |
| " 3 | 168 | 260 | 179 | 161 | 182 | – |
| " 4 | 171 | 217 | 179 | 168 | 185 | – |
| " 5 | 162 | 207 | 168 | 147 | 177 | – |
| " 6 | 152 | 234 | 158 | 148 | 175 | – |
| " 7 | 154 | 241 | 158 | 150 | 183 | – |
| " 8 | 156 | 244 | 152 | 149 | 183 | – |
| " 9 | 155 | 231 | 151 | 147 | 178 | – |
| " 10 | 159 | 239 | 162 | 148 | 173 | – |
| " 11 | 153 | 235 | 147 | 149 | 176 | – |
| V-Beisp. 2 | 215 | 287 | 201 | 199 | 230 | – |
| Beispiel 12 | 217 | 280 | 203 | 203 | 229 | – |
| V-Beisp. 3 | 193 | 326 | 186 | 187 | 233 | – |
| Beispiel 13 | 195 | 315 | 182 | 183 | 234 | – |
| " 14 | 191 | 317 | 185 | 184 | 231 | – |

Tabelle 6:

| Katalysator gealtert | Anspringtemperatur/°C | | | | | |
| | $\lambda = 0,98$ | | | $\lambda = 1,01$ | | |
| | $CO_{50}$ | $HC_{50}$ | $NO_{50}$ | $CO_{50}$ | $HC_{50}$ | $NO_{50}$ |
| V-Beisp. 1 | 222 | 342 | 226 | 208 | 285 | – |
| Beispiel 1 | 213 | 317 | 218 | 199 | 273 | – |
| " 2 | 208 | 321 | 211 | 200 | 269 | – |
| " 3 | 212 | 333 | 214 | 203 | 275 | – |
| " 4 | 215 | 319 | 217 | 200 | 277 | – |
| " 5 | 220 | 321 | 223 | 209 | 285 | – |
| " 6 | 209 | 332 | 215 | 203 | 268 | – |
| " 7 | 207 | 324 | 211 | 186 | 287 | – |
| " 8 | 180 | 317 | 187 | 173 | 283 | – |
| " 9 | 198 | 319 | 205 | 190 | 278 | – |
| " 10 | 198 | 323 | 202 | 182 | 278 | – |
| " 11 | 198 | 317 | 200 | 181 | 283 | – |
| V-Beisp. 2 | 280 | – | 265 | 267 | 310 | – |
| Beispiel 12 | 278 | – | 268 | 269 | 312 | – |
| V-Beisp. 3 | 275 | – | 260 | 259 | 306 | – |
| Beispiel 13 | 278 | – | 261 | 257 | 309 | – |
| " 14 | 273 | – | 259 | 259 | 309 | – |

Tabelle 7:

| Katalysator frisch | Gleichgewichtskonversion [ % ] | | | | | |
|---|---|---|---|---|---|---|
| | λ = 0,98 (fett) | | | λ = 1,01 (mager) | | |
| | CO | HC | NO | CO | HC | NO |
| V-Beisp. 1 | 81 | 96 | 100 | 99 | 99 | 10 |
| Beispiel 1 | 94 | 96 | 100 | 99 | 99 | 14 |
| " 2 | 84 | 97 | 100 | 99 | 99 | 16 |
| " 3 | 83 | 96 | 100 | 99 | 99 | 13 |
| " 4 | 90 | 97 | 100 | 99 | 99 | 11 |
| " 5 | 91 | 93 | 100 | 99 | 99 | 14 |
| " 6 | 85 | 95 | 100 | 99 | 99 | 18 |
| " 7 | 83 | 96 | 100 | 99 | 99 | 11 |
| " 8 | 84 | 92 | 100 | 99 | 99 | 15 |
| " 9 | 83 | 95 | 100 | 99 | 99 | 15 |
| " 10 | 82 | 97 | 100 | 99 | 99 | 16 |
| " 11 | 90 | 97 | 100 | 99 | 99 | 15 |
| V-Beisp. 2 | 79 | 89 | 99 | 99 | 99 | 25 |
| Beispiel 12 | 81 | 86 | 99 | 99 | 99 | 26 |
| V-Beisp. 3 | 91 | 46 | 99 | 99 | 99 | 21 |
| Beispiel 13 | 90 | 49 | 99 | 99 | 99 | 23 |
| " 14 | 90 | 48 | 99 | 99 | 99 | 21 |

Tabelle 8:

| Katalysator gealtert | Gleichgewichtskonversion [ % ] | | | | | |
|---|---|---|---|---|---|---|
| | λ = 0,98 (fett) | | | λ = 1,01 (mager) | | |
| | CO | HC | NO | CO | HC | NO |
| V-Beisp. 1 | 80 | 15 | 99 | 99 | 86 | 23 |
| Beispiel 1 | 92 | 36 | 99 | 99 | 87 | 25 |
| " 2 | 91 | 23 | 99 | 99 | 86 | 24 |
| " 3 | 89 | 13 | 99 | 99 | 85 | 26 |
| " 4 | 92 | 34 | 99 | 99 | 86 | 24 |
| " 5 | 90 | 33 | 99 | 99 | 87 | 22 |
| " 6 | 82 | 17 | 99 | 99 | 91 | 21 |
| " 7 | 93 | 39 | 99 | 99 | 91 | 19 |
| " 8 | 91 | 33 | 99 | 99 | 88 | 23 |
| " 9 | 92 | 18 | 99 | 99 | 89 | 24 |
| " 10 | 95 | 23 | 99 | 99 | 83 | 26 |
| " 11 | 95 | 41 | 99 | 99 | 86 | 19 |
| V-Beisp. 2 | 76 | 11 | 97 | 99 | 95 | 24 |
| Beispiel 12 | 73 | 14 | 97 | 99 | 97 | 25 |
| V-Beisp. 3 | 67 | 9 | 99 | 99 | 96 | 22 |
| Beispiel 13 | 69 | 10 | 99 | 99 | 96 | 23 |
| " 14 | 67 | 10 | 99 | 99 | 97 | 23 |

## Patentansprüche

1. Verfahren zur Herstellung eines Trägermaterials für Platingruppenmetall-haltige Dreiwegkatalysatoren zur Reinigung der Abgase von Brennkraftmaschinen, welches gegebenenfalls mit einem oder mehreren Oxiden von Unedelmetallen dotiert ist, bestehend aus aktivem Aluminiumoxid und mindestens 10 Gew.% Ceroxid, bezogen auf die Summe aller Trägerbestandteile, erhalten durch Trocknen eines wäßrigen, aus Aluminiumoxid und einer Cerverbindung bestehenden Gemisches und anschließendes Tempern bei mindestens 350° C,
**dadurch gekennzeichnet**,
daß eine wäßrige Suspension aus bis zu 90 Gewichtsteilen aktivem, gegebenenfalls gitterstabilisiertem Aluminiumoxid und/oder seiner jeweiligen Vorstufe und mindestens 10 Gewichtsteilen Ceroxid oder einer löslichen und/oder unlöslichen Vorstufe des Ceroxids, gerechnet als CeO$_2$, sprühgetrocknet und das dabei erhaltene Gut 15 Minuten bis 24 Stunden bei Temperaturen bis 1140°C, vorzugsweise bei 700 - 1050° C, getempert wird.

2. Verfahren zur Herstellung eines Trägermaterial nach Anspruch 1,
**dadurch gekennzeichnet**,
daß man 100 Gewichtsteile des Trägermaterials nach Anspruch 1 noch mit bis zu 80 Gewichtsteilen eines üblichen gamma-Aluminiumoxids oder einer Vorstufe desselben und/oder eines üblichen Ceroxids, gerechnet als CeO$_2$, oder einer seiner löslichen und/oder unlöslichen Vorstufen kombiniert.

3. Verwendung eines nach den Verfahren der Ansprüche 1 oder 2 hergestellten Trägermaterials zur Fertigung von Autoabgasreinigungskatalysatoren mit verringerter Neigung zur H$_2$S-Emission.

## Claims

1. Process for the production of a support material for three-way catalysts containing platinum group metals for the purification of exhaust gases from internal combustion engines, which optionally is doped with one or more oxides of non-noble metals, consisting of active aluminium oxide and at least 10 wt.% of cerise oxide, relative to the sum of all support constituents, obtained by drying an aqueous mixture consisting of aluminium oxide and a cerise compound and subsequent annealing at at least 350 °C,
characterized in that an aqueous suspension of up to 90 parts by weight of active, optionally lattice-stabilized aluminium oxide and/or its particular precursor, and at least 10 parts by weight of cerise oxide or of a soluble and/or insoluble precursor of the cerise oxide, calculated as CeO$_2$, is spray-dried and the material thereby obtained is annealed for 15 minutes to 24 hours at temperatures up to 1140 °C, preferably at 700-1050 °C.

2. Process for the production of a support material according to Claim 1,
characterized in that 100 parts by weight of the support material according to Claim 1 is in addition combined with up to 80 parts by weight of a conventional gamma-aluminium oxide or a precursor thereof and/or a conventional cerise oxide, calculated as CeO$_2$, or one of its soluble and/or insoluble precursors.

3. Use of a support material produced by the process of Claim 1 or 2 for the manufacture of car exhaust gas purification catalysts with reduced tendency for H$_2$S emission.

## Revendications

1. Procédé de préparation d'un matériau support pour catalyseurs à 3 voies contenant un métal du groupe du platine, destiné à l'épuration des gaz d'échappement des moteurs à combustion interne, doté le cas échéant d'un ou plusieurs oxydes de métaux communs, constitué par de l'oxyde d'aluminium activé et au minimum 10 % en poids d'oxyde de cérium, exprimé par rapport à la somme des parties constitutives du support, obtenu par séchage d'un mélange aqueux composé d'oxyde d'aluminium et d'un composé de cérium et ensuite recuit à au moins 350°C, caractérisé en ce qu'une suspension aqueuse comprenant jusqu'à 90 parties en poids d'oxyde d'aluminium, éventuellement stabilisé en réseau et/ou de son progéniteur respectif et au moins 10 parties en poids d'oxyde de cérium ou d'un progéniteur de celui-ci soluble et/ou insoluble, parties exprimées en CeO$_2$, est séchée par pulvérisation et, en outre, la matière obtenue est recuite pendant 15 minutes jusqu'à 24 heures à des températures allant jusqu'à 1140°C, de préférence entre 700 et 1050°C.

2. Procédé de préparation d'un matériau de support selon la revendication 1, caractérisé en ce qu'on combine 100 parties en poids du matériau de support conforme à la revendication 1 avec jusqu'à 80 parties en poids d'un oxyde d'aluminium gamma ou d'un progéniteur de celui-ci et/ou d'un oxyde de cérium courant, calculé en CeO$_2$, ou de l'un de ses progéniteurs solubles et/ou insolubles.

3. Utilisation d'un matériau de support préparé selon le procédé de la revendication 1 ou de la revendication 2, pour produire des catalyseurs destinés à la purification des gaz d'échappement des voitures automobiles, avec tendance réduite à l'émission de $H_2S$.